# EUROPEAN PATENT SPECIFICATION

(11) **EP 2 617 752 B1**
(45) Date of publication and mention of the grant of the patent: **25.07.2018**
(21) Application number: 11825164.4
(22) Date of filing: 13.09.2011
(51) Int. Cl.: C08G 59/68, C08F 4/54

(54) **COMPOSITION USABLE AS THERMAL-LATENT POLYMERIZATION INITIATOR**
ALS THERMISCH LATENTER POLYMERISATIONSINITIATOR NUTZBARE ZUSAMMENSETZUNG
COMPOSITION UTILISABLE COMME INITIATEUR DE POLYMÉRISATION LATENT THERMIQUE

(30) Priority: 15.09.2010 JP 2010207120
(43) Date of publication of application: 24.07.2013
(73) Proprietor: Nippon Shokubai Co., Ltd., Osaka-shi, Osaka 541-0043 (JP)
(72) Inventor: TANAKA, Tomoaki, Suita-shi Osaka 564-8512 (JP); KATSUMI, Ikuyo, Suita-shi Osaka 564-8512 (JP)
(74) Representative: Müller-Boré & Partner Patentanwälte PartG mbB
(86) International application number: PCT/JP2011/070885
(87) International publication number: WO 2012/036164

(56) References cited:
- WO-A1-98/07798
- JP-A- 2000 344 814
- JP-A- 2008 544 067
- JP-A- 2011 099 086
- US-A1- 2004 048 975
- ANDREW J. MOUNTFORD ET AL: "Intra- and inter-molecular C?H?F?C and N?H?F?C hydrogen bonding in secondary amine adducts of B(C6F5)3: relevance to key interactions in alkene polymerisation catalysis", CHEMICAL COMMUNICATIONS, no. 17, 1 January 2003 (2003-01-01), pages 2148-2149, XP055075995, ISSN: 1359-7345, DOI: 10.1039/b305613a
- ANDREW J. MOUNTFORD ET AL: "Intra- and Intermolecular N-H...F-C Hydrogen-Bonding Interactions in Amine Adducts of Tris(pentafluorophenyl)borane and -alane", INORGANIC CHEMISTRY, vol. 44, no. 16, 1 August 2005 (2005-08-01), pages 5921-5933, XP055075999, ISSN: 0020-1669, DOI: 10.1021/ic050663n
- MOUNTFORD A.J. ET AL.: 'Intra- and inter-molecular C-H···F-C and N-H···F-C hydrogen bonding in secondary amine adducts of B(C6F5)3: relevance to key interactions in alkene polymerisation catalysis' CHEMICAL COMMUNICATIONS vol. 17, 2003, pages 2148 - 2149, XP055075995
- MOUNTFORD A.J. ET AL.: 'Intra- and Intermolecular N-H···F-C Hydrogen-Bonding Interactions in Amine Adducts of Tris(pentafluorophenyl)borane and -alane' INORGANIC CHEMISTRY vol. 44, no. 16, 2005, pages 5921 - 5933, XP055075999

## Description

The present invention relates to a composition which is usable as a thermal-latent polymerization initiator, use of the composition as a thermal-latent polymerization initiator, a method of polymerization using the composition as a thermal-latent polymerization initiator, and a curable composition containing the composition.

A Lewis acid can receive an electron pair from a Lewis base; as a result, the Lewis base becomes a cation. Such a cation derived from a Lewis base has a high reactivity. Therefore, a Lewis acid is used as a catalyst. For example, a Lewis acid such as tris(pentafluorophenyl)borane is used as a catalyst for polymerizing and curing a monomer such as an epoxy monomer and an acrylic monomer, and a prepolymer which is an oligomer of the monomers.

However, when tris(pentafluorophenyl)borane or the like is used, a reaction starts immediately after the catalyst contacts a monomer or a prepolymer due to a superior catalytic ability. Therefore, it is extremely difficult to distribute a composition which contains such a catalyst and a monomer or a prepolymer to the market as a product.

Under the above-described situation, a thermal-latent polymerization initiator has been developed. The polymerization initiator does not exhibit a catalytic activity at ordinary temperature even when mixed with a monomer or a prepolymer, but exhibit a catalytic activity with heating.

For example, Patent Document 1 discloses a curing catalyst which contains a Lewis acid and a nitrogen-containing compound such as a monoamine and a heterocyclic aromatic organic compound. However, although there is conceptual description having a broad range, such as a monoamine or heterocyclic aromatic organic compound, only N-methylimidazole is actually used in the Examples in the Patent Document 1. In addition, the curing onset temperature of a prepolymer composition which contains the catalyst is very high as about 200°C.

Furthermore, Patent Documents 2 to 6 disclose a polymerization catalyst which contains an organoborane and an ethanolamine derivative, polyoxyalkylenepolyamine or an aziridine compound. In addition, Patent Document 7 discloses a polymerization catalyst consisting of a salt obtained from an ammonium salt and a Lewis acid compound.

Patent Document 1: JP 2008-544067 T
Patent Document 2: JP 2000-504353 A
Patent Document 3: JP H11-503729 A
Patent Document 4: JP H11-504625 A
Patent Document 5: JP H11-510845 A
Patent Document 6: JP 2001-502689 A
Patent Document 7: JP 2004-533467 A

As described above, a thermal-latent polymerization initiator, of which catalytic ability can be controlled depending on temperature, has been already developed. However, a polymerization initiator which does not catalyze a polymerization at ordinary temperature but can catalyze at comparatively low temperature and which has an excellent catalytic ability is needed.

Under the above-described circumstance, the objective of the present invention is to provide a composition used as a thermal-latent polymerization initiator which does not catalyze a polymerization at ordinary temperature but can catalyze at lower temperature in comparison with the case of using a conventional thermal-latent polymerization initiator and which has an excellent catalytic ability. In addition, the objective of the present invention is to provide a method of polymerization using the thermal-latent polymerization initiator, and a curable composition containing the thermal-latent polymerization initiator.

The present inventors intensively studied so as to solve the above problems. As a result, the inventors found that a mixture of tris(pentafluorophenyl)borane and an amine compound having a piperidine structure does not exhibit a catalytic ability at ordinary temperature but can exhibit a very excellent catalytic ability by heating at comparatively low temperature, to complete the present invention.

The composition according to the present invention is characterized in comprising tris(pentafluorophenyl)borane and an amine compound having a piperidine structure, wherein the amine compound is selected from the following compounds: 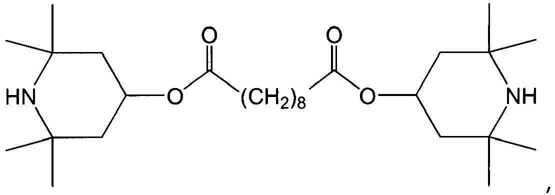 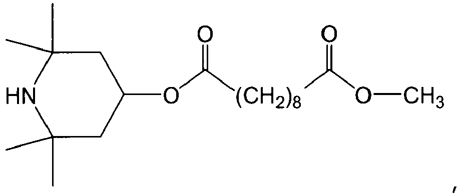 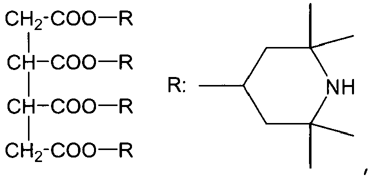 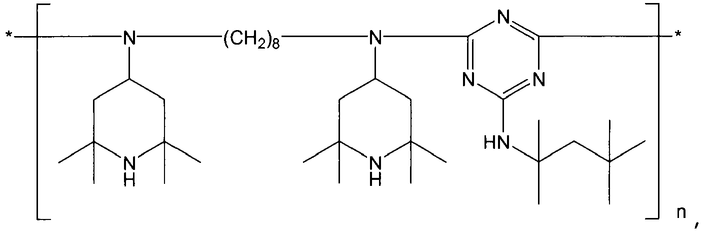 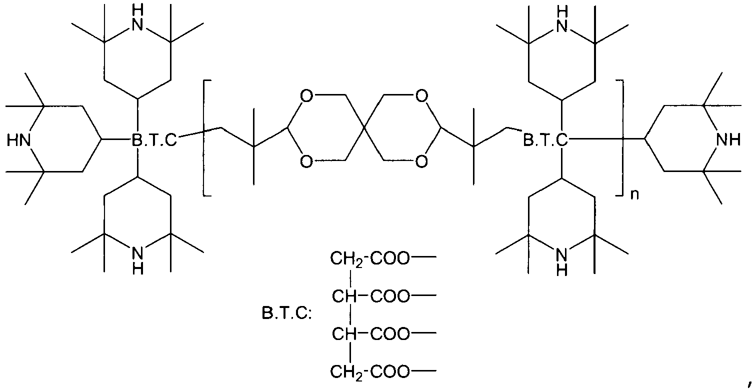 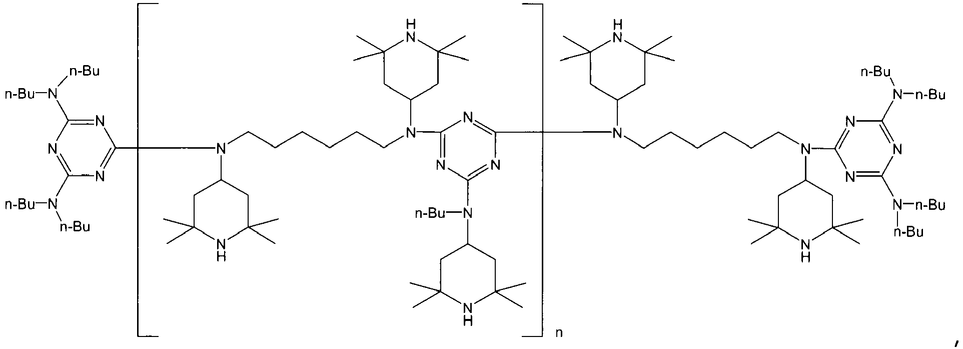 and 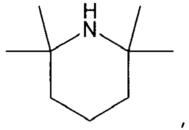 wherein n is 2 or more.

The method for producing a polymer according to the present invention is characterized in comprising the steps of mixing the above composition (as thermal-latent polymerization initiator) with one monomer or not less than two monomers selected from an epoxy monomer, a cationically polymerizable monomer and an oligomer of an epoxy monomer and/or a cationically polymerizable monomer; and heating the obtained mixture at not less than 50°C. A polymerization onset temperature of the thermal-latent polymerization initiator according to the present invention is not less than about 50°C, and an ordinary temperature is not generally 50°C or more. Accordingly, the thermal-latent polymerization initiator according to the present invention has a very excellent thermal-latent property, as the polymerization initiator does not cure a monomer and a prepolymer at ordinary temperature but exhibits polymerization catalytic activity at relatively low temperature as not less than 50°C.

The curable composition according to the present invention is characterized in comprising the above thermal-latent polymerization initiator, and one monomer or not less than two monomers selected from an epoxy monomer, a cationically polymerizable monomer and an oligomer of an epoxy monomer and/or a cationically polymerizable monomer.

The composition of the present invention exhibits a very excellent thermal-latent property. Specifically, the composition does not exhibit a polymerization catalytic ability at ordinary temperature but can exhibit a very excellent polymerization catalytic ability at comparatively low temperature as not less than 50°C. Therefore, when the composition of the present invention is mixed with a monomer or a prepolymer to obtain a curable composition, the obtained curable composition can be directly distributed to the market as a product. In addition, the curable composition can be easily cured by heating at comparatively low temperature as needed basis. Therefore, the composition of the present invention is industrially very useful as a thermal-latent polymerization catalyst.

The composition according to the present invention can be easily produced by mixing a specific amine compound with tris(pentafluorophenyl)borane in a solvent. More specifically, a specific amine compound or a solution thereof may be added dropwise to a solution of tris(pentafluorophenyl)borane, or a solution of tris(pentafluorophenyl)borane may be added dropwise to a specific amine compound or a solution thereof.

It is likely in the composition of the present invention that some or all of the lone electron pair of the nitrogen atom in the piperidine is coordinated to a boron atom of tris(pentafluorophenyl)borane to form a complex, and as a result, the catalytic activity is controlled.

A solvent to be used is not particularly limited as long as the solvent does not inhibit a complex formation from the amine compound and tris(pentafluorophenyl)borane and can appropriately dissolve the compounds, and is exemplified by an aromatic hydrocarbon solvent such as toluene; an aliphatic hydrocarbon solvent such as n-hexane; a ketone solvent such as acetone; an alcohol solvent such as methanol; an ether solvent such as tetrahydrofuran; an ester solvent such as ethyl acetate; a nitrile solvent such as acetonitrile; a halogenated hydrocarbon solvent such as chloroform; an amide solvent such as dimethylformamide; a sulfoxide solvent such as dimethylsulfoxide; a lactone solvent such as γ-butyrolactone; a carbonate ester solvent such as ethylene carbonate; a mixed solvent of two or more the above-described solvents. A solvent of a tris(pentafluorophenyl)borane solution may be same as or may be different from a solvent of an amine compound solution.

A concentration of a tris(pentafluorophenyl)borane solution may be properly adjusted, and may be generally adjusted to be not less than 0.1 mass% and not more than 90 mass%.

If the amine compound is in the form of a liquid, the compound may be directly added dropwise. Alternatively, the amine compound may be dissolved in a solvent to be added dropwise. A concentration in the amine compound solution may be properly adjusted, and is generally adjusted to be not less than 0.1 mass% and not more than 90 mass%.

If the amine compound is commercially available, such a product may be used. Even when the amine compound is not commercially available, the person skilled in the art can easily synthesize the compound. For example, the amine compound (Ia) shown below has a simple chemical structure; and therefore, the compound is commercially available or can be easily synthesized from a commercially available compound. The amine compound (Ib) shown below has an ester group and the like in the chemical structure; and therefore, the compound can be easily synthesized by a conventional esterification reaction or transesterification reaction.

The amine compound (Ia) is demonstrated as follows.

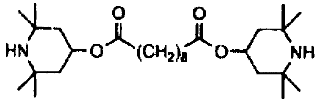

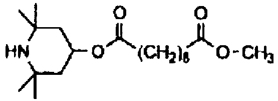

The amine compound (Ib) is demonstrated as follows.

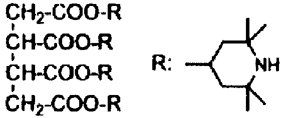

The amine compounds which are polymers are demonstrated as follows.

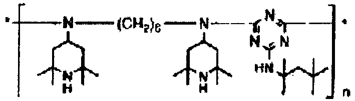

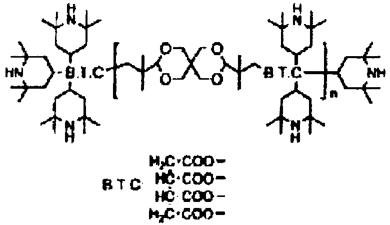

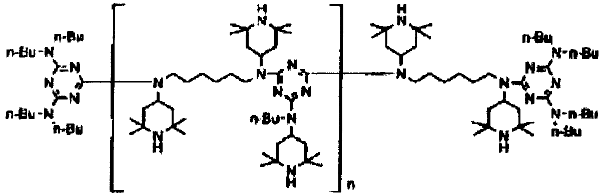

The amine compound (Ic) is demonstrated as follows.

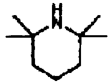

In the composition of the present invention, it is preferred that a molar ratio of the piperidine structure in the amine compound relative to tris(pentafluorophenyl)borane is adjusted to be not less than 0.9, and more preferably not less than 1.0. It is likely in the composition of the present invention that some or all of the lone electron pair of the nitrogen atom in the piperidine is coordinated to a boron atom of tris(pentafluorophenyl)borane to form a complex, and as a result, the catalytic activity is controlled. Therefore, a thermal-latent property may be possibly improved by allowing the above lone electron pair to sufficiently coordinate to the above boron atom. On the other hand, when the molar ratio is too large, an amount of tris(pentafluorophenyl)borane becomes too small relative to the amine compound in the composition, and a polymerization catalytic property may not be possibly exhibited sufficiently due to inhibition of polymerization. Therefore, the molar ratio is preferably not more than 20, more preferably not more than 15, even more preferably not more than 10, and particularly preferably not more than 5. A molar number of the piperidine structure in the amine compound can be represented by [a molar number of the amine compound] × [the number of the piperidine structure in the amine compound].

A condition for mixing the amine compound and tris (pentafluorophenyl) borane is not particularly limited, and may be properly adjusted. For example, it is preferred that the amine compound or a solution thereof is added dropwise to a stirred tris(pentafluorophenyl)borane solution, but the opposite condition may be employed. A reaction temperature may be an ordinary temperature, and is more preferably not less than 20°C and not more than 40°C. A reaction time is not also particularly limited, and it is not necessary to further progress the reaction after the dropwise addition since a complex is immediately formed by adding the amine compound or a solution thereof in drops . However, the reaction mixture may be further continuously stirred after the dropwise addition for not less than about 30 minutes and not more than about 5 hours.

A treatment after the reaction may be carried out in a usual manner. For example, when the composition is insolubilized or crystallized to be precipitated during the addition of the amine compound or the solution thereof, the precipitated composition may be removed by filtration and washed using a poor solvent such as n-hexane. Thereafter, the precipitated composition may be preferably dried under reduced pressure.

The composition according to the present invention can be used as a thermal-latent polymerization catalyst.

The composition according to the present invention is particularly useful as a polymerization catalyst of an epoxy monomer, a cationically polymerizable monomer and a prepolymer which is an oligomer of an epoxy monomer and/or a cationically polymerizable monomer.

An epoxy monomer is exemplified by glycidyl phenyl ether, allyl glycidyl ether, 1,6-hexanediol diglycidylether, hydrogenerated bisphenol A diglycidylether, 3,4-epoxycyclohexenylmethyl-3',4'-epoxycyclohexene carboxylate, epoxylated polyorganosiloxane and the like. A cationically polymerizable monomer is exemplified by isobutene, styrene, α-methylstyrene, vinyl ether compound, N-vinylcarbazole and the like.

In the present invention, an oligomer is not particularly limited, and is generally a polymer consisting of not less than 2 and not more than 100 of monomers. A polymerization number of an oligomer is preferably not less than 5, and preferably not more than 90, more preferably not more than 70.

When the curable composition is obtained by mixing the thermal-latent polymerization initiator according to the present invention with a prepolymer and the like, a ratio of the thermal-latent polymerization initiator can be adjusted to be not less than about 0.01 mass% and not more than about 50 mass% relative to a prepolymer and the like. The ratio is preferably not less than 0.05 mass%, more preferably not less than 0.1 mass%, even more preferably not less than 0.2 mass%, and preferably not more than 30 mass%, more preferably not more than 20 mass%, even more preferably not more than 10 mass%, particularly preferably not more than 5 mass%.

The above-described curable composition may contain a solvent. When a solvent is used, it becomes easy to mix the thermal-latent polymerization initiator with a prepolymer and the like. A solvent used for the curable composition is not limited as long as the solvent can adequately dissolve both of the amine compound according to the present invention and tris(pentafluorophenyl)borane, and is exemplified by an aromatic hydrocarbon solvent such as toluene; an aliphatic hydrocarbon solvent such as n-hexane; a ketone solvent such as acetone; an alcohol solvent such as methanol; an ether solvent such as tetrahydrofuran; an ester solvent such as ethyl acetate; a nitrile solvent such as acetonitrile; a halogenated hydrocarbon solvent such as chloroform; an amide solvent such as dimethylformamide; a sulfoxide solvent such as dimethylsulfoxide; a lactone solvent such as γ-butyrolactone; a carbonate ester solvent such as ethylene carbonate.

Other than the above-described components, an additive agent such as an antistatic agent, a curing agent, a flame retardant, an antimicrobial agent, an antioxidizing agent and a pigment may be compounded in the curable composition according to the present invention.

The curable composition according to the present invention is not cured at ordinary temperature by the effect of the thermal-latent polymerization initiator, which is a polymerization catalyst, according to the present invention. However, when the composition is heated, the thermal-latent polymerization initiator according to the present invention exhibits a polymerization catalytic activity and the composition is cured.

A heating temperature for curing is preferably not less than 50°C, and more preferably not less than 60°C. On the other hand, when the temperature is too high, a cured substance may be possibly decomposed; therefore, the heating temperature is preferably not more than 500°C, more preferably not more than 400°C, even more preferably not more than 300°C, and particularly preferably not more than 200°C. A curing start temperature by the thermal-latent polymerization initiator according to the present invention is preferably not less than 50°C, since when the curing start temperature is not less than 50°C, curing hardly starts at ordinary temperature. The curing onset temperature is more preferably not less than 60°C, more preferably not less than 70°C, even more preferably not less than 80°C, particularly preferably not less than 90°C, and preferably not more than 500°C, more preferably not more than 400°C, even more preferably not more than 300°C, particularly preferably not more than 200°C.

### EXAMPLES

Hereinafter, the present invention is described in more detail with Examples. However, the present invention is not limited to the Examples in any way, and it is possible to carry out the present invention according to the Examples with an additional appropriate change within the range of the above description and the following description. Such a change is also included in the technical scope of the present invention.

### Example 1

### (1) Production of the thermal-latent polymerization initiator according to the present invention

Tris(pentafluorophenyl)borane (0.928 g, 1.813 mmol) is dissolved in acetone (0.301 g). Hereinafter, tris(pentafluorophenyl)borane is abbreviated to "TPB". To the stirred mixture, 2,2,6,6-tetramethylpiperidine (0.301 g, 2.130 mmol) was added dropwise at ordinary temperature. A white crystal was precipitated during the dropwise addition. The obtained slurry was filtrated under reduced pressure and the crystal washed with n-hexane. The obtained cake was dried under reduced pressure at 40°C, to obtain 0.533 g of the thermal-latent polymerization initiator as a white crystal. The obtained thermal-latent polymerization initiator was analyzed by LC. As a result, a content rate of TPB was 78.0%, and a ratio of the piperidine structure relative to TPB was 1.02.
¹H-NMR (CDCl₃) ppm: δ1.25(12H, s), 1.58(4H, m), 1.74(2H, m)
¹⁹F-NMR (CDCl₃) ppm: δ-89.3(6F, m), -84.7(3F, m), -60.0(6F, d)

### (2) Curing test

In 1 part by mass of γ-butyrolactone, 1 part by mass of the above obtained thermal-latent polymerization initiator was dissolved. With 99 parts by mass of a hydrogenerated bisphenol A type epoxy resin (YX-8000, manufactured by Japan Epoxy Resins Co. Ltd.), which was a bifunctional epoxy monomer, 1 part by mass of the thermal-latent polymerization initiator solution was mixed. The amount of the polymerization initiator solution corresponded to 0.5 parts by mass of a TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 79. 7°C and exothermic peak was observed at 129. 2°C. A gross heating value was 428 mJ/mg. After the analysis, the resin was completely cured.

### Example 2

### (1) Production of the thermal-latent polymerization initiator according to the present invention

TPB (0.1713 g, 0.335 mmol), bis(2,2,6,6-tetramethyl-4-piperidyl) sebacate (TINUVIN770DF, manufactured by BASF, the chemical structure is demonstrated in Table 1, 0.0781 g, 0.162 mmol) and γ-butyrolactone (0.2427 g) were mixed under stirring, to prepare a γ-butyrolactone solution which contained 50 wt% of the thermal-latent polymerization initiator. With respect to the polymerization initiator, a content rate of TPB was 68.7% and a ratio of the piperidine structure relative to TPB was 0.97.

### (2) Curing test

With 99 parts by mass of a hydrogenerated bisphenol A type epoxy resin (YX-8000, manufactured by Japan Epoxy Resins Co. Ltd.), 1 part by mass of the above thermal-latent polymerization initiator solution was mixed. The amount of the solution corresponded to 0.5 parts by mass of a TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 64.4°C and exothermic peak was observed at 111.1°C. A gross heating value was 446 mJ/mg. After the analysis, the resin was completely cured.

### Example 3

### (1) Production of the thermal-latent polymerization initiator according to the present invention

TPB (1.613 g, 3.151 mmol) was dissolved in a mixed solvent of toluene (8.74 g) and n-hexane (75.07 g). To the stirred solution, a solution obtained by dissolving bis(2,2,6,6-tetramethyl-4-piperidyl) sebacate (TINUVIN770DF, manufactured by BASF, of which chemical structure is demonstrated in Table 1, 1.514 g, 3.150 mmol) in n-hexane (31.99 g) was added dropwise at ordinary temperature. During the addition, a white crystal was precipitated. The obtained slurry was filtered under reduced pressure and the crystal was washed with n-hexane. The obtained cake was dried under reduced pressure at ordinary temperature, to obtain 2.244 g of the thermal-latent polymerization initiator as a white crystal. The complex was analysis by LC. As a result, a content rate of TPB was 56.2% and a ratio of the piperidine structure relative to TPB was 1.66.
¹H-NMR (acetone-d₆) ppm: δ1.20-1. 70 (42H, m), 2.10(4H, dd), 2.31 (4H, t), 5.24(2H, m)
¹⁹F-NMR (acetone-d₆) ppm: δ-90.9(6F, m), -87.3(3F, m), -58.9(6F, d)

### (2) Curing test

In 1 part by mass of γ-butyrolactone, 1 part by mass of the above thermal-latent polymerization initiator was dissolved. With 99 parts by mass of a hydrogenerated bisphenol A type epoxy resin (YX-8000, manufactured by Japan Epoxy Resins Co. Ltd.), 1 part by mass of the thermal-latent polymerization initiator solution was mixed. The amount of the polymerization initiator solution corresponded to 0.5 parts by mass of a TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 82.5°C and exothermic peak was observed at 124. 5°C. A gross heating value was 429 mJ/mg. After the analysis, the resin was completely cured.

### Example 6

### (1) Production of the thermal-latent polymerization initiator according to the present invention

TPB (3.242 g, 6.332 mmol) was dissolved in a mixed solvent of toluene (47.00 g) and methylcyclohexane (278.24 g). To the stirred solution, a solution obtained by dissolving CHIMASSORB2020FDL (manufactured by BASF, 2.898 g, of which chemical structure is demonstrated in Table 1) in methylcyclohexane (61.38 g) was added dropwise at ordinary temperature. A white crystal was precipitated during the dropwise addition. The obtained slurry was filtrated under reduced pressure and the crystal was washed with n-hexane. The obtained cake was dried under reduced pressure at ordinary temperature, to obtain 4.258 g of the thermal-latent polymerization initiator as a white crystal. The obtained complex was analyzed by LC. As a result, a content rate of TPB was 59.9%, and a ratio of the piperidine structure relative to TPB was 2.01.
¹H-NMR (acetone-d₆) ppm: δ0.80-0.96(2nH, m), 1.2-2.0(22nH, m), 2.8-3.8(22nH, m), 5.3-5.6(nH, m) ¹⁹F-NMR (acetone-d₆) ppm: δ-90.3(6F, m), -86.6(3F, dd), -58.7(6F, d)

### (2) Curing test

In 1 part by mass of γ-butyrolactone, 1 part by mass of the above thermal-latent polymerization initiator was dissolved. With 99 parts by mass of a hydrogenerated bisphenol A type epoxy resin (YX-8000, manufactured by Japan Epoxy Resins Co. Ltd.), 1 part by mass of the thermal-latent polymerization initiator solution was mixed. The amount of the polymerization initiator solution corresponded to 0.5 parts by mass of a TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 69.5°C and exothermic peak was observed at 110.5°C. A gross heating value was 437 mJ/mg. After the analysis, the resin was completely cured.

### Example 7

### (1) Production of the thermal-latent polymerization initiator according to the present invention

TPB (0.0881 g, 0.172 mmol), 2,2,6,6-tetramethyl-4-piperidine ester of 1,2,3,4-butanetetracarboxylic acid (Adekastab LA57, manufactured by Adeka Corporation, of which chemical structure is demonstrated in Table 1, 0.0438 g, 0.055 mmol) and γ-butyrolactone (0.1368 g) were mixed under stirring, to prepare a γ-butyrolactone solution which contained 50 wt% of the thermal-latent polymerization initiator. With respect to the polymerization initiator, a content rate of TPB was 66.8% and a ratio of the piperidine structure relative to TPB was 1.29.

### (2) Curing test

With 99 parts by mass of a hydrogenerated bisphenol A type epoxy resin (YX-8000, manufactured by Japan Epoxy Resins Co. Ltd.), 1 part by mass of the thermal-latent polymerization initiator solution was mixed. The amount of the polymerization initiator solution corresponded to 0.5 parts by mass of a TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 76.8°C and exothermic peak was observed at 115.5°C. A gross heating value was 438 mJ/mg. After the analysis, the resin was completely cured.

### Comparative Example 1

### (1) Production of a TPB-DBU mixture

TPB (1.63 g) was dissolved in a mixed solvent of toluene (8.88 g) and n-hexane (76.31 g). To the stirred solution, diazabicycloundecene (0.530 g, DBU) was added dropwise. A white crystal was precipitated. The obtained solid was filtrated and washed with n-hexane. The solid was dried, to obtain 0.61 g of a TPB-DBU mixture as a white solid. With respect to the obtained mixture, a content rate of TPB was 42.9%, and a ratio of nitrogen atom relative to TPB was 8.95.

### (2) Curing test

In 1 part by mass of γ-butyrolactone, 1 part by mass of the above TPB-DBU mixture was dissolved. With 99 parts by mass of a hydrogenerated bisphenol A type epoxy resin (YX-8000, manufactured by Japan Epoxy Resins Co. Ltd.), 1 part by mass of the mixture solution was mixed. The amount of the mixture solution corresponded to 0.5 parts by mass of a TPB-DBU mixture . The obtained solution (10 mg) was analyzed by differential scanning calorimetry. In the analysis, a range of measurement temperature and a rate of temperature increase were set to be 30 to 300°C and 10°C/min, respectively. As a result, a peak which was associated with an exothermal reaction was not observed. After the analysis, the resin was not cured.

The above results are arranged in Table 1. In Table 1, a ratio of TPB and an amine compound in Comparative Example 1 corresponds to a molar number of nitrogen atom relative to 1 mole of TPB.

**Table 1**

| | Amine compound | Piperidine structure/ TPB (mol/mol) | Curing onset temperature | Exothermic peak temperature | Gross heating value |
|---|---|---|---|---|---|
| Example 1 | 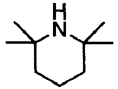 | 1.02 | 79.7°C | 129.2°C | 428mJ/mg |
| Example 2 | 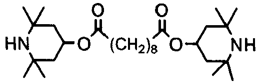 | 0.97 | 64.4°C | 111.1°C | 446mJ/mg |
| Example 3 | | 1.66 | 82.5°C | 124.5°C | 429mJ/mg |
| Example 6 | 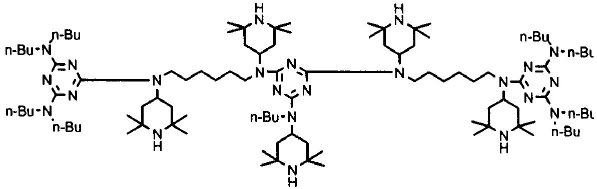 | 2.01 (calcularted under the condition of n=∞) | 69.5°C | 110.5°C | 437mJ/mg |
| Example 7 | 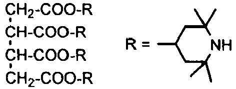 | 1.29 | 76.8°C | 115.5°C | 438mJ/mg |
| Comparative Example 1 | 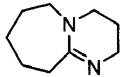 | 8.95 (N/TPB) | Resin was not cured. | | |

As the above results, in the case of using a mixture of DBU and TPB, which did not have the piperidine structure according to the present invention, the composition was not cured even if the composition was heated.

On the other hand, in the case of using a mixture of TPB and the amine compound having the piperidine structure according to the present invention, which is used as the thermal-latent polymerization initiator according to the present invention, the composition was not cured at ordinary temperature but curing was started at relatively low temperature as not less than 50°C. In addition, a gross heating value was not less than 400 mJ/mg, which was evidence that polymerization reaction was sufficiently progressed. From the above results, it was experimentally demonstrated that the thermal-latent polymerization initiator according to the present invention has very excellent properties as a thermal-latent polymerization initiator.

### Example 8

### (1) Production of the thermal-latent polymerization initiator according to the present invention

TPB (0.1709 g, 0.334 mmol), 2,2,6,6-tetramethyl-4-piperidine ester of 1,2,3,4-butanetetracarboxylic acid (Adekastab LA57, manufactured by Adeka Corporation, of which chemical structure is demonstrated in Table 2, 0.0671 g, 0.085 mmol) and γ-butyrolactone (0.2352 g) were mixed under stirring, to prepare a γ-butyrolactone solution which contained 50 wt% of the thermal-latent polymerization initiator. With respect to the polymerization initiator, a content rate of TPB was 71.8% and a ratio of the piperidine structure relative to TPB was 1.02.

### (2) Curing test

With 99 parts by mass of a hydrogenerated bisphenol A type epoxy resin (YX-8000, manufactured by Japan Epoxy Resins Co. Ltd.), 1 part by mass of the thermal-latent polymerization initiator solution was mixed. The amount of the polymerization initiator solution corresponded to 0.5 parts by mass of TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 68.3°C and exothermic peak was observed at 113.6°C. A gross heating value was 426 mJ/mg. After the analysis, the resin was completely cured.

### Example 9

With 99 parts by mass of an aliphatic cyclic epoxy resin (CELLOXIDE 2021P, manufactured by DAICEL Corporation), 1 part by mass of the thermal-latent polymerization initiator solution obtained in the Example 8(1) was mixed. The amount of the polymerization initiator solution corresponded to 0.5 parts by mass of TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 69 . 2°C and exothermic peak was observed at 123.1°C. A gross heating value was 565 mJ/mg. After the analysis, the resin was completely cured.

### Example 10

An epoxy resin was preliminarily prepared by mixing 75 parts by mass of a hydrogenerated bisphenol A type epoxy resin (YX-8000, manufactured by Japan Epoxy Resins Co. Ltd.) and 25 parts by mass of a high polymer hydrogenerated bisphenol A type epoxy resin (YX-8040, manufactured by Japan Epoxy Resins Co. Ltd.). With the epoxy resin, 1 part by mass of the thermal-latent polymerization initiator solution obtained in the Example 8(1) was mixed. The amount of the polymerization initiator solution corresponded to 0.5 parts by mass of TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 75. 2°C and exothermic peak was observed at 120.6°C. A gross heating value was 356 mJ/mg. After the analysis, the resin was completely cured.

### Example 11

With 60 parts by mass of a hydrogenerated bisphenol A type epoxy resin (YX-8000, manufactured by Japan Epoxy Resins Co. Ltd.) and 40 parts by mass of an oxetane resin (Aron Oxetane OXT-221, manufactured by TOAGOSEI Co., Ltd.), 1 part by mass of the thermal-latent polymerization initiator solution obtained in the Example 8 (1) was mixed. The amount of the polymerization initiator solution corresponded to 0.5 parts by mass of TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 51.6°C and exothermic peak was observed at 102.5°C. A gross heating value was 415 mJ/mg. After the analysis, the resin was completely cured.

### Comparative Example 2

TPB (0.1714 g, 0.335 mmol), N-methylimidazole (0.0282 g, 0.343 mmol) and γ-butyrolactone (0.2032 g) were mixed under stirring, to obtain a γ-butyrolactone solution which contained 50 wt% of a thermal-latent polymerization initiator. With respect to the polymerization initiator, a content rate of TPB was 85.9% and a ratio of nitrogen atom relative to TPB was 2.05.

With 99 parts by mass of a hydrogenerated bisphenol A type epoxy resin (YX-8000, manufactured by Japan Epoxy Resins Co. Ltd.), 1 part by mass of the above thermal-latent polymerization initiator solution was mixed. The amount of the polymerization initiator solution corresponded to 0.5 parts by mass of TPB complex. The obtained solution (10 mg) was analyzed by differential scanning calorimetry. In the analysis, a range of measurement temperature and a rate of temperature increase were set to be 30 to 300°C and 10°C/min, respectively. As a result, heat generation was observed from 67.2°C and exothermic peak was observed at 87.9°C. A gross heating value was 4.6 mJ/mg. After the analysis, the resin was not cured.

### Comparative Example 3

TPB (0.1709 g, 0.334 mmol), N-methylimidazole (0.0154 g, 0.188 mmol) and γ-butyrolactone (0.1898 g) were mixed under stirring, to obtain a γ-butyrolactone solution which contained 50 wt% of a thermal-latent polymerization initiator. With respect to the polymerization initiator, a content rate of TPB was 91.7% and a ratio of nitrogen atom relative to TPB was 1.12.

With 99 parts by mass of a hydrogenerated bisphenol A type epoxy resin (YX-8000, manufactured by Japan Epoxy Resins Co. Ltd.), 1 part by mass of the above thermal-latent polymerization initiator solution was mixed. The amount of the polymerization initiator solution corresponded to 0.5 parts by mass of TPB complex. A preservation stability of the obtained resin composition was low, and the composition was cured at room temperature after a while.

The above results are arranged in Table 2.

**Table 2**

| | Amine compound | Resin | Piperidine structure/ TPB (mol/mol) | Curing onset temperature | Exothermic peak temperature | Gross heating value |
|---|---|---|---|---|---|---|
| Example 8 | 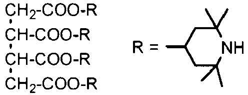 | YX-8000 | 1.02 | 68.3°C | 113.6°C | 426mJ/mg |
| Example 9 | | CELLOXIDE 2021P | 1.02 | 69.2°C | 123.1°C | 565mJ/mg |
| Example 10 | | YX-8000/YX-8040 = 75/25 | 1.02 | 75.2°C | 120.6°C | 356mJ/mg |
| Example 11 | | YX-8000/OXT-221 = 60/40 | 1.02 | 51.6°C | 102.5°C | 415mJ/mg |
| Comparative Example 2 | 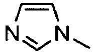 | YX-8000 | 2.05 (N/TPB) | 67.2°C | 87.9°C | 4.6mJ/mg |
| Comparative Example 3 | | | 1.12 (N/TPB) | Ordinary temperature | - | - |

As the above results, in the case of using a mixture of an imidazole derivative and TPB, which did not have the piperidine structure according to the present invention, a curing reaction was progressed even at ordinary temperature when an amount of the mixture was small, and a curing reaction was not sufficiently progressed even when an amount of the mixture was increased.

On the other hand, in the case of using a mixture of TPB and the amine compound having the piperidine structure according to the present invention, which is used as the thermal-latent polymerization initiator according to the present invention, the composition was not cured at ordinary temperature but curing was started at relatively low temperature as not less than 50°C. In addition, a gross heating value was not less than 400 mJ/mg, which was evidence that polymerization reaction was sufficiently progressed. From the above results, it was experimentally demonstrated that the thermal-latent polymerization initiator according to the present invention has very excellent properties as a thermal-latent polymerization initiator.

## Claims

1. A composition, comprising tris(pentafluorophenyl)borane and an amine compound having a piperidine structure, wherein the amine compound is selected from the following compounds: 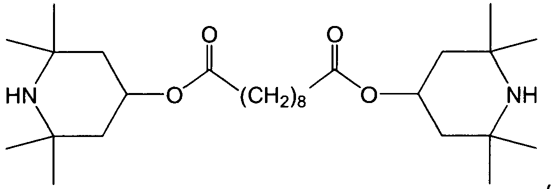 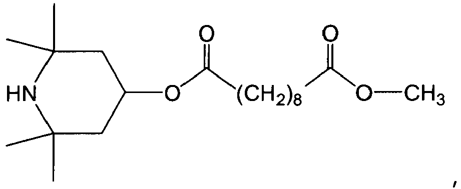 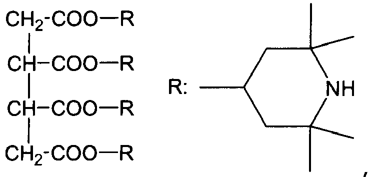 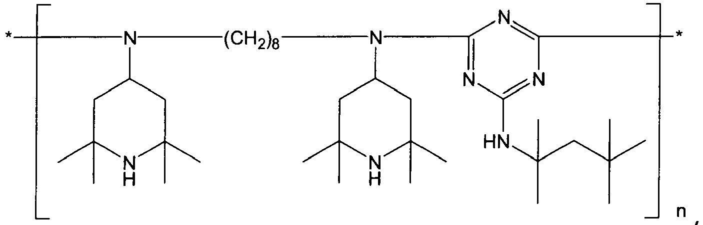 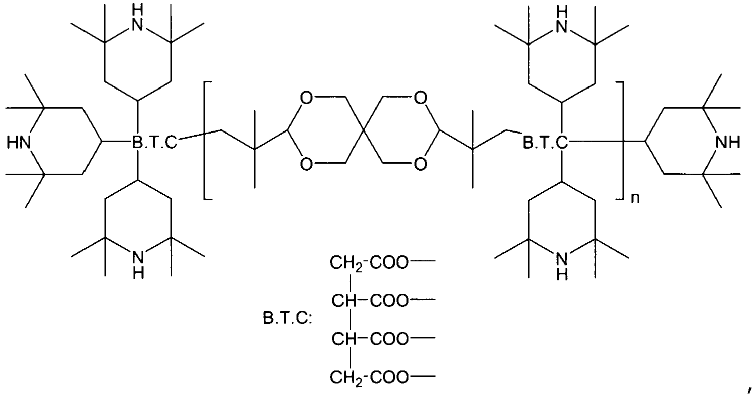 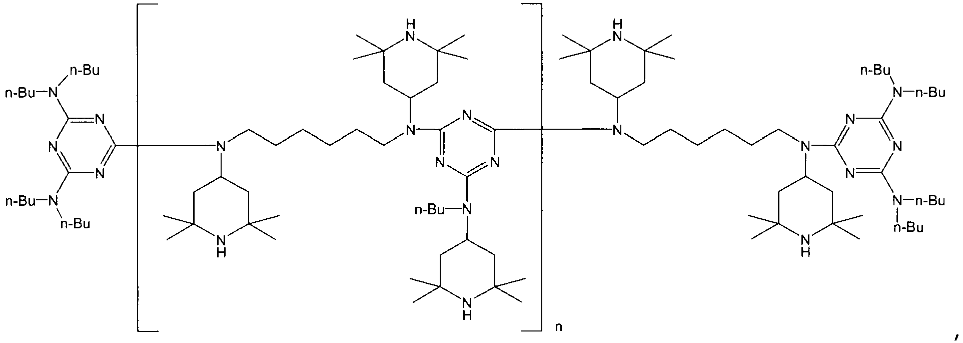 and 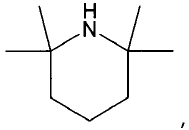 wherein n is 2 or more.

2. Use of the composition according to claim 1 as a thermal-latent polymerization initiator.

3. A method for producing a polymer, comprising the steps of:
mixing the composition according to claim 1 with one monomer or not less than two monomers selected from an epoxy monomer, a cationically polymerizable monomer and an oligomer of an epoxy monomer and/or a cationically polymerizable monomer; and
heating the obtained mixture at not less than 50°C.

4. A curable composition, comprising the composition according to claim 1, and one monomer or not less than two monomers selected from an epoxy monomer, a cationically polymerizable monomer and an oligomer of an epoxy monomer and/or a cationically polymerizable monomer.

## Patentansprüche

1. Zusammensetzung, umfassend Tris(pentafluorphenyl)boran und eine Aminverbindung mit einer Piperidinstruktur, wobei die Aminverbindung aus den folgenden Verbindungen ausgewählt ist: 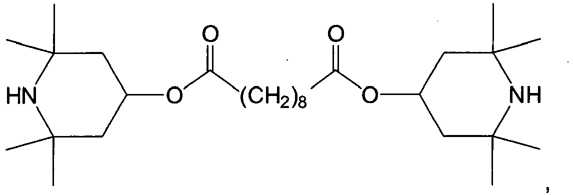 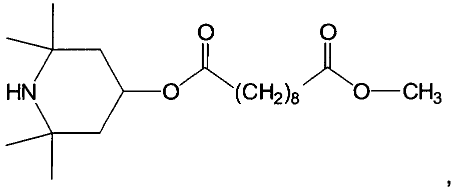 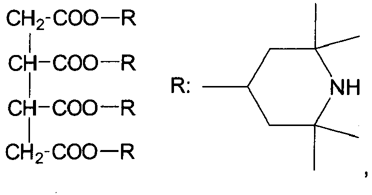 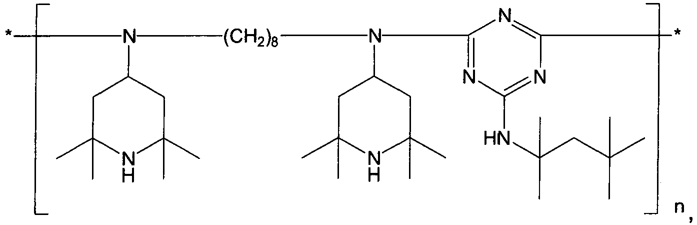 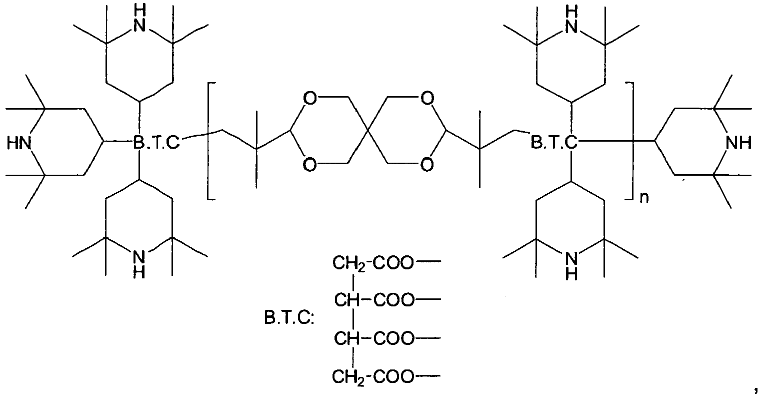 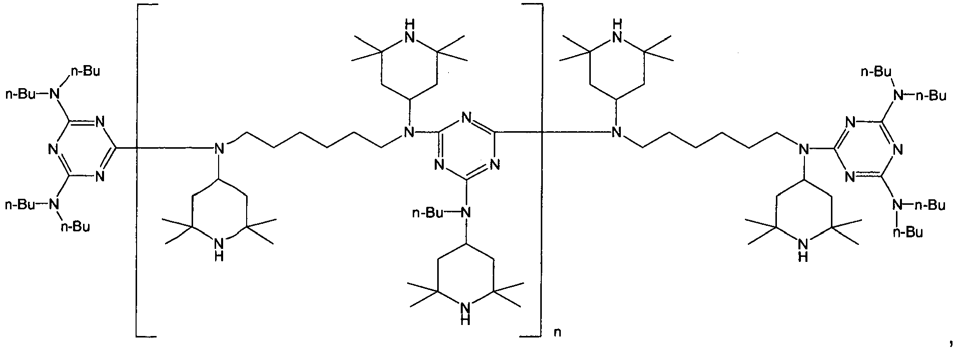 und 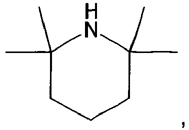 wobei n 2 oder mehr ist.

2. Verwendung der Zusammensetzung nach Anspruch 1 als thermisch-latenter Polymerisationsinitiator.

3. Verfahren zur Herstellung eines Polymers, umfassend die Schritte des:
Mischens der Zusammensetzung nach Anspruch 1 mit einem Monomer oder nicht weniger als zwei Monomeren, ausgewählt aus einem Epoxidmonomer, einem kationisch polymerisierbaren Monomer und einem Oligomer aus einem Epoxidmonomer und/oder einem kationisch polymerisierbaren Monomer; und
Erhitzens der erhaltenen Mischung auf nicht weniger als 50°C.

4. Härtbare Zusammensetzung, umfassend die Zusammensetzung nach Anspruch 1 und ein Monomer oder nicht weniger als zwei Monomere, ausgewählt aus einem Epoxidmonomer, einem kationisch polymerisierbaren Monomer und einem Oligomer aus einem Epoxidmonomer und/oder einem kationisch polymerisierbaren Monomer.

## Revendications

1. Composition comprenant du tris(pentafluorophényl)borane et un composé d'amine ayant une structure de pipéridine, dans laquelle le composé d'amine est sélectionné parmi les composés suivants : 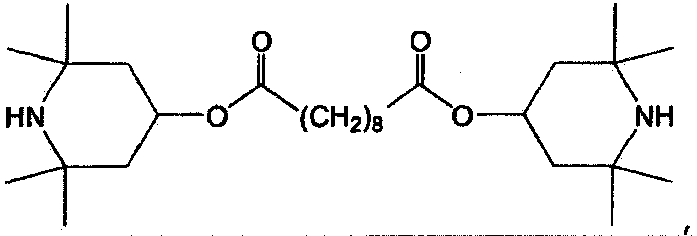 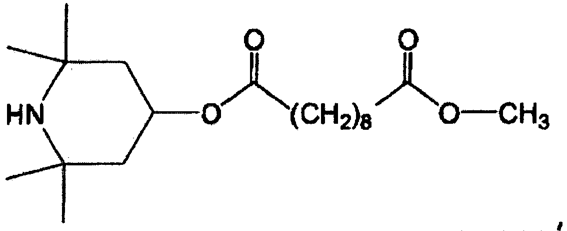 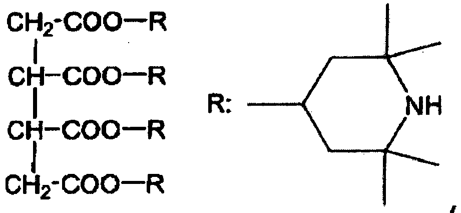 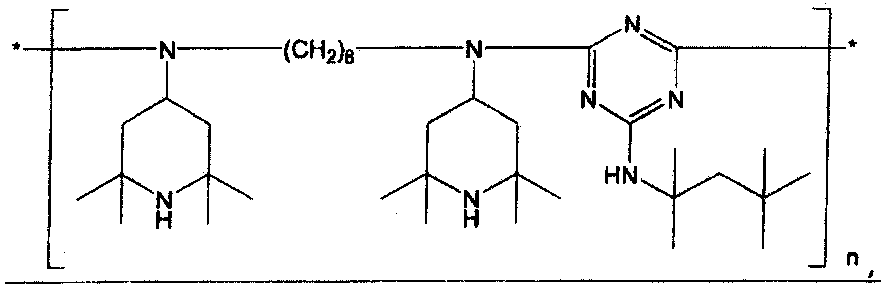 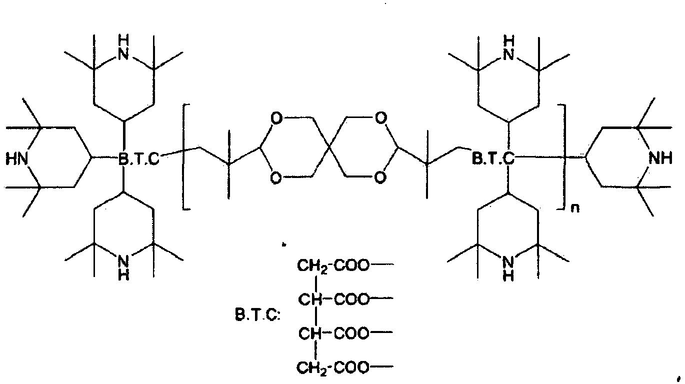 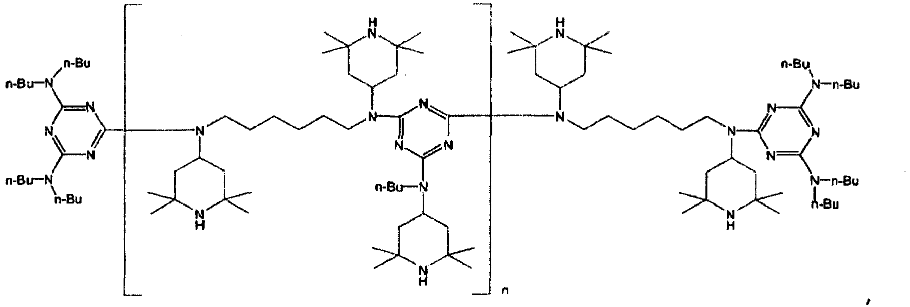 et 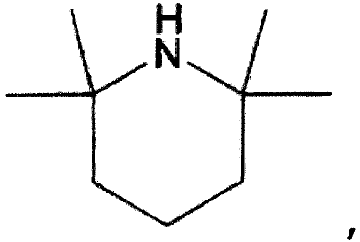 dans lesquels n vaut 2 ou plus.

2. Utilisation de la composition selon la revendication 1 comme initiateur de polymérisation à latence thermique.

3. Procédé de production d'un polymère comprenant les étapes consistant à :
mélanger la composition selon la revendication 1 avec un monomère ou pas moins de deux monomères sélectionnés parmi un monomère époxy, un monomère polymérisable par voie cationique et un oligomère d'un monomère époxy et/ou d'un monomère polymérisable par voie cationique ; et
chauffer le mélange obtenu à pas moins de 50°C.

4. Composition durcissable comprenant la composition selon la revendication 1 et un monomère ou pas moins de deux monomères sélectionnés parmi un monomère époxy, un monomère polymérisable par voie cationique et un oligomère d'un monomère époxy et/ou d'un monomère polymérisable par voie cationique.
